# EUROPEAN PATENT SPECIFICATION

(11) **EP 0 904 841 B1**
(45) Date of publication and mention of the grant of the patent: **28.01.2004**
(21) Application number: 98117824.7
(22) Date of filing: 19.09.1998
(51) Int. Cl.: B01L 9/06, B01J 19/00

(54) **Compound handling system comprising racks and containers**
System zur Handhabung von Verbindungen, bestehend aus Gefässen und Trägern
Système de manutention de composés, comprenant des supports et des récipients

(30) Priority: 29.09.1997 EP 97116891
(43) Date of publication of application: 31.03.1999
(73) Proprietor: F. HOFFMANN-LA ROCHE AG, 4070 Basel (CH)
(72) Inventor: Fattinger, Christof, CH-4249 Blauen (CH); Tschirky, Hansjörg, CH-4107 Ettingen (CH)
(74) Representative: Ventocilla, Abraham

(56) References cited:
- EP-A- 0 219 802
- US-A- 4 510 119
- US-A- 5 048 957
- US-A- 5 551 828

## Description

The invention concerns a method for putting together a plurality of selected aliquots of chemical or biological compounds or samples.

The invention also concerns a system for forming an arrangement comprising a plurality of selected aliquots of chemical or biological samples.

The invention further concerns a rack for use in a compound handling system for handling a multiplicity of tubes containing aliquots of chemical or biological compounds or samples.

In the pharmaceutical research chemical or biochemical compounds are routinely screened for their potential activity. For this purpose samples of hundreds of thousands of compounds have to be available in the shortest possible time. Typically, selections of several hundred or thousand small sample quantitites (aliquots) are needed. Presently, these sample aliquots are pipetted on demand from reservoir containers in which the individual compounds are stored into sample tubes. Frequently, the compounds are deep frozen for long term storage. They have to be thawed for aliquot pipetting and then frozen again. Aside from the fact that this procedure is cumbersome and time consuming the frequent freezing and thawing cycles may result in the deterioration of the compounds. In addition the reiterated pipetting may lead to contamination of the compounds. In each of these cases valuable and expensive compounds may have to be phased out and replaced before the entire quantity has been used up. This may constitute a substantial loss.

U.S. Patent Specifications No. 4,510,119 and 5,048,957 describe racks having storage cavities, each of which is open at both ends. These racks are so designed that sample tubes can only be inserted into those storage cavities from above in downwards direction and removed therefrom from above in upwards direction. In order to prevent traveling of the sample tubes through the bottom of the rack the storage cavities have a tapered cross-section or the rack comprises a bottom support.

It is the aim of the present invention to provide a method, a system and a rack which are not afflicted with the above-mentioned disadvantages.

According to a first aspect of the invention the above aim is attained with a rack according to claim 1.

According to a second aspect of the invention the above aim is attained with a system according to claim 4.

According to a third aspect of the invention the above aim is attained with a method according to claim 11.

Preferred embodiments are defined by the dependent claims.

Advantageously, the rack with the sample tubes inserted thereinto resembles the shape of a microtiter plate which can be handled by conventional robots used in high throuput screening.

Preferred embodiments of the invention are described in the following making reference to the accompanying drawings. It is shown in the drawings in
Fig. 1 a perspective view of a storage rack with containers in various typical positions
Fig. 2 a crossectional view along line A-A in Fig. 1
Fig.3 a more detailed view of a portion of Fig. 2
Fig. 4 an inside view of a storage room
Fig. 5 a perspective view of a transfer system for transferring individual containers from storage plates to transport plates

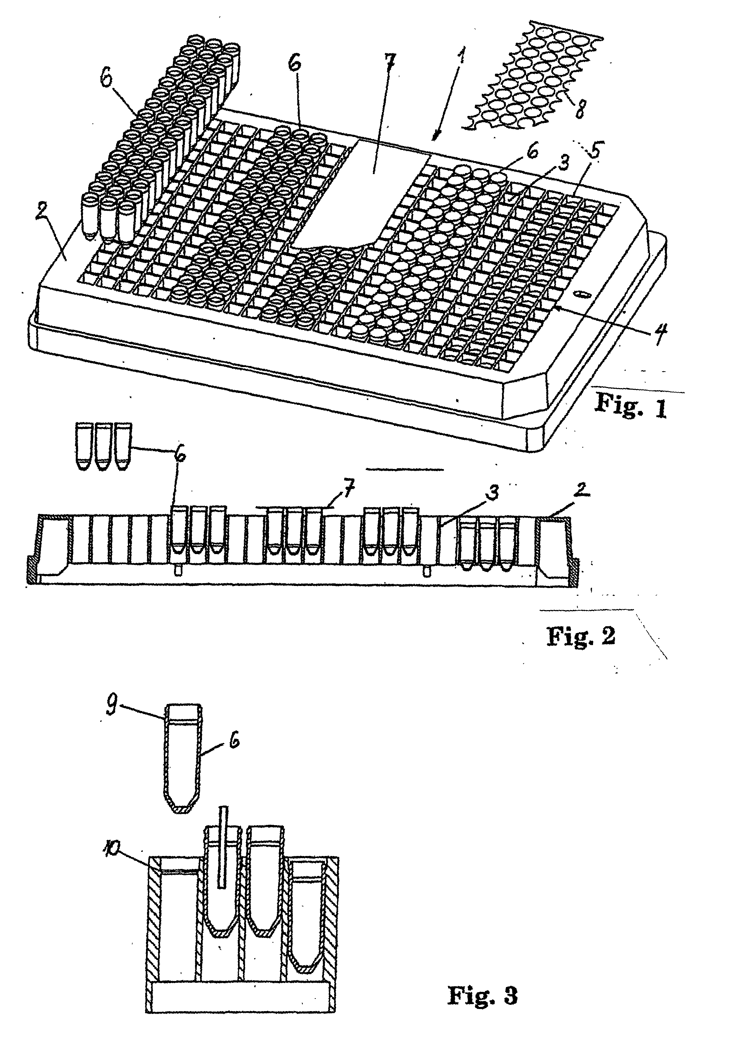

The storage plate or rack 1 shown in perspective representation in Fig.1 has a peripheral frame portion 2 for mechanical rigidity and grid-like separation walls 3 defining sixteen rows 4 of twentyfour individual rectangular storage cavities 5 each, that is 384 storage cavities for an equal number of microtubes 6.

The storage cavities 5 are open at both ends, i.e. at the top as well as at the bottom surface of the rack. The purpose of the two openings will be explained later in this specification.

Various groups of microtubes 6 are shown in Figures 1-3 in different, positions relative to the rack 1. This situation is only made up for demonstration purposes in connection with the present specification and does not represent an actual situation. In reality all the tubes belonging to one rack are in the same position which may be one of those shown in Fig. 1.

The first group on the left side is in the position prior to insertion of the tubes into the rack. The second group of tubes is inserted in the rack but only to a position where the upper rims of the tubes still project above the upper surface of the rack. This is the filling position in which aliquots of compounds are pipetted into the tubes. After the tubes have been filled they remain in the same position for the next processing step, i.e. the closing. All the tubes of a rack together are covered with an aluminum foil 7 which is sealed, e.g.welded onto the upper edges of the tube openings. The technology for this step is well known in the packaging art, e.g. from the closing of blister packs with aluminum foil.

These procedural steps, especially the filling and sealing are preferably performed under sterile conditions or inert gas so that any contamination of the compounds is avoided. Moreover the pipetting is preferably performed by pipetting systems with multiple pipettes for simultaneous filling groups of tubes.

The next group of tubes is shown after the foil has been punched around the upper edges of the tube openings. Also shown is the remainder 8 of the foil after punching. In the position shown at the right side the tubes are fully placed inside the storage cavities 5. To move the tubes into this position they may be just pushed down by a suitable stamp or piston after the punching of the foil. Alternatively, after the welding of the foil the tubes may be pushed upwards and entirely out of the rack into the punching tool and afterwards are reintroduced into the rack from below. This alternative allows safer separation of the foil without any breakage.

In the fully inserted position the tubes are stored in the rack 1 in a storage room under appropriate storage conditions such as low temperature, darkness etc. Due to these storage conditions and also due to the sterility during filling and sealing the compounds can be stored for very long times without deterioration.

The tubes are made of a material which stays elastic at deep temperatures. It has been found that e.g. polypropylene is suitable for this purpose.

In the more detailed Fig. 3 certain features of the tubes and the storage cavities for holding the tubes in place can be seen. The tubes are provided with two parallel annular ridges 9 around the upper portion of their outside wall. The separation walls 3 defining the cavities 5 are provided with projections 10 extending parallel to and at a small distance below their upper edge. When the tubes are being fully inserted as shown for the group of tubes at the right of the rack, the projections 10 snap in between the two ridges 9. In this position the tubes are safely hold in their places.

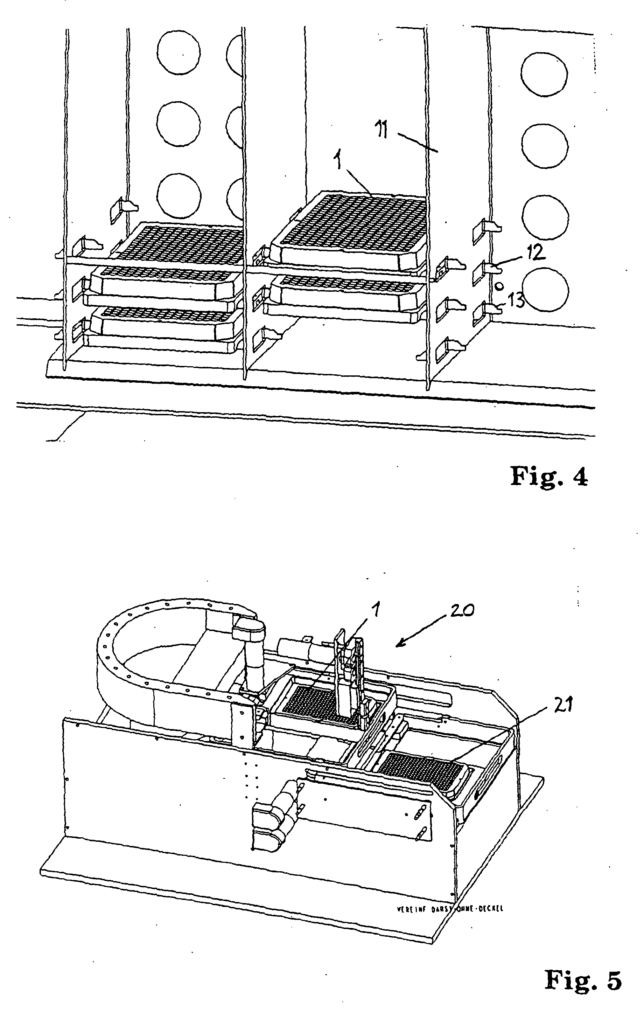

The storage racks with the tubes containing the compound aliquots are stored in a cold room shown in Fig. 4. the cold room is humidity-controlled and kept at a temperature of -20° centigrade. The cold room is equipped with vertical shelf partition walls 11 having support elements 12 extending therefrom. The support elements are provided with inclined upper edges 13 for the purpose of centering the racks 1 resting thereon.

Putting together a selection of compound aliquots according to certain selection criteria is effected in a transfer station 20 shown in Fig. 5. This transfer station is inside the storage room or in an area connected to it having the same temperature conditions. The compound selection is assembled on transport rack 21 placed in the station. The rack 21 may be of the same type as the storage racks 1 or could be of different size. It is advantageous however that it has the same cavity pattern as the storage racks.

The transfer station contains conveying means for placing a storage rack 1 containing at least one tube with a desired compound aliquot in it on top of the transport rack. The two superposed racks are arranged such that the cavity containing the desired tube is in line with the transport rack cavity which is to receive the desired aliquot. In this relative position the tube is simply pushed from its storage position into the appropriate position in the transport rack.

Conveying means as well as electronic control means needed for the relative positioning of the two racks are well known in the art and do not have to be described here.

## Claims

1. A rack for use in a compound handling system for handling a multiplicity of tubes (6) containing aliquots of chemical or biological compounds or samples, said rack comprising:
a peripheral frame (2), said frame having a top side and a bottom side;
grid-like separation walls (3) that define a plurality of rows of storage cavities (5) within said frame, each of said cavities being suitable for receiving and holding a tube (6) containing a chemical or biological compound or sample in aliquotted form, the storage cavities (5) being defined by said separation walls (3), each of said storage cavities having an inner wall and being open at the top side of the frame and open at the bottom side of the frame so that a sample tube (6) is insertable into the storage cavity from either the top side of the frame or the bottom side of the frame and is removable from the storage cavity from either the top side of the frame or the bottom side of the frame, and
means (10) for retaining a sample tube (6) within each of said storage cavities (5), said retaining means comprising a projection (10) of the inner surface of the wall of each storage cavity, said projection being suitable for snapping between two ridges (9) of the outer wall of a sample tube (6) that is positioned within the storage cavity.

2. A rack according to claim 1, wherein each of said cavities (5) is suitable for receiving a sample tube (6) fully placed into said cavity.

3. A rack according to claim 1, wherein each of said storage cavities (5) is rectangular.

4. A system for forming an arrangement comprising a plurality of selected aliquots of chemical or biological samples, said system being **characterized in that** it comprises
(a) a transfer station (20),
(b) a first rack (1) according to claim 1 for storage of sample tubes (6) containing aliquots of one or more chemical or biological compounds or samples, said aliquots being each contained in a sample tube (6) positioned and hold in one of said cavities (5), said first rack having a cavity pattern,
(c) a second rack (21) according to claim 1 for transport of said sample tubes (6), said second rack being suitable for being positioned within said transfer station (20), said second rack (21) having the same cavity pattern as said first rack (1),
(d) conveying means for placing said storage rack on top of said transport rack (21) within said transfer station (20), so that one of the cavities of the storage rack (1) containing a sample tube (6) is in line with an empty cavity of said transport rack (21), and
(e) means for pushing said sample tube (6) from said cavity of the storage rack (1) to said empty cavity of the transport rack (21).

5. The system of claim 4, wherein each of said storage cavities allows insertion and removal of a sample tube from either the top or the bottom side of the rack and with the same orientation of the sample tube (6) with respect to the rack (1).

6. The system of claim 4, wherein each of said cavities (5) of said storage rack (1) is suitable for receiving a sample tube (6) fully placed into said cavity.

7. The system of claim 4, wherein each of said cavities (5) of said storage rack (1) is rectangular.

8. The system of claim 4, wherein each of said sample tubes (6) has a generally cylindrical shape and an outer surface having a pair of parallel annular ridges (9) which are suitable for engaging said projection (10) of the retaining means.

9. The system of claim 4, wherein each tube (6) has an opening that is sealed with foil (7).

10. A method for putting together a plurality of selected aliquots of chemical or biological compounds or samples comprising
(a) placing a first rack (1) according to claim 1 for storage of sample tubes (6) containing aliquots of one or more chemical or biological compounds or samples on top of a second rack (21) according to claim 1 for transport of said sample tubes (6), said second rack belonging to and being suitable for being positioned within a transfer station (20), said aliquots being each contained in a sample tube (6) positioned and hold in one of said cavities (5),
said placing providing that one storage cavity of the first rack (1) containing a sample tube (6) is in line with an empty storage cavity of said second rack, and
(b) pushing a sample tube (6) from a cavity of the first rack (1) to said empty cavity of said second rack (21).

## Patentansprüche

1. Gestell zur Verwendung in einem System zur Verbindungs-Handhabung zur Handhabung einer Mehrzahl von Röhrchen (6), die Aliquots mit chemischen oder biologischen Verbindungen oder Proben enthalten, wobei dieses Gestell
- einen Umfangsrahmen (2), wobei der Umfangsrahmen eine obere Seite und eine untere Seite aufweist;
- gitterähnliche Trennwände (3), die eine Vielzahl von Reihen mit Vertiefungen (5) zur Aufbewahrung innerhalb des Rahmens definieren, wobei jede dieser Vertiefungen dafür geeignet ist, ein Röhrchen (6), das eine chemische oder biologische Verbindung oder Probe in Aliquotform enthält, aufzunehmen und zu halten, wobei die Vertiefungen (5) zur Aufbewahrung durch die Trennwände (3) definiert sind, wobei jede der Vertiefungen zur Aufbewahrung eine Innenwand aufweist und an der oberen Seite des Rahmens offen und an der unteren Seite des Rahmens offen ist, so dass ein Probenröhrchen (6) in die Vertiefung zur Aufbewahrung entweder von der oberen Seite des Rahmens oder der unteren Seite des Rahmens einsetzbar ist und aus der Vertiefung zur Aufbewahrung entweder von der oberen Seite des Rahmens oder der unteren Seite des Rahmens entfernbar ist und
- ein Mittel (10) zum Halten des Probenröhrchens (6) innerhalb der Vertiefungen (5) zur Aufbewahrung, wobei dieses Haltemittel einen Vorsprung (10) der inneren Oberfläche der Wand jeder Vertiefung zur Aufbewahrung umfasst und dieser Vorsprung dafür geeignet ist, zwischen zwei Kanten (9) der äußeren Wand eines Teströhrchens (6), das innerhalb der Vertiefung zur Aufbewahrung angeordnet ist, einzuschnappen, umfasst.

2. Gestell nach Anspruch 1, worin jede dieser Vertiefungen (5) dafür geeignet ist, ein Probenröhrchen (6) aufzunehmen, das vollständig in der Vertiefung platziert ist.

3. Gestell nach Anspruch 1, worin jede dieser Vertiefungen zur Aufbewahrung (5) rechteckig ist.

4. System zur Ausbildung einer Anordnung, die eine Vielzahl ausgewählter Aliquots mit chemischen oder biologischen Proben umfasst, wobei dieses System **dadurch gekennzeichnet ist, dass** es
(a) eine Übertragungsstation (20),
(b) ein erstes Gestell (1) nach Anspruch 1 zur Aufbewahrung der Probenröhrchen (6), die Aliquots mit einer oder mehreren chemischen oder biologischen Verbindungen oder Proben enthalten, wobei die Aliquots jeweils in einem Probenröhrchen (6) enthalten sind, das in einer der Vertiefungen (5) angeordnet ist und gehalten wird, wobei das erste Gestell ein Vertiefungsmuster aufweist,
(c) ein zweites Gestell (21) nach Anspruch 1 für den Transport der Probenröhrchen (6), wobei das zweite Gestell dafür geeignet ist, dass es innerhalb der Übertragungsstation (20) angeordnet ist und das zweite Gestell (21) das gleiche Vertiefungsmuster wie das erste Gestell (1) aufweist,
(d) ein Beförderungsmittel zum Platzieren des Aufbewahrungsgestells auf den oberen Bereich des Transportgestells (21) innerhalb der Übertragungsstation (20), so dass eine der Vertiefungen des Aufbewahrungsgestells (1), die ein Probenröhrchen (6) enthält, mit einer leeren Vertiefung des Transportgestells (21) übereinstimmt, und
(e) ein Mittel zum Ausstoßen dieses Probenröhrchens (6) aus der Vertiefung des Aufbewahrungsgestells (1) in die leere Vertiefung des Transportgestells (21), umfasst.

5. System nach Anspruch 4, worin jede der Vertiefungen zur Aufbewahrung das Einsetzen und Entfernen eines Probenröhrchens aus entweder der oberen oder der unteren Seite des Gestells und mit der gleichen Orientierung des Probenröhrchens (6) in Bezug auf das Gestell (1) ermöglicht.

6. System nach Anspruch 4, worin jede der Vertiefungen (5) des Aufbewahrungsgestells (1) dafür geeignet ist, ein Probenröhrchen (6), das vollständig in der Vertiefung platziert ist, aufzunehmen.

7. System nach Anspruch 4, worin jede der Vertiefungen (5) des Aufbewahrungsgestells (1) rechteckig ist.

8. System nach Anspruch 4, worin jedes der Probenröhrchen (6) eine allgemein zylindrische Form und eine äußere Oberfläche mit einem Paar aus parallel ringförmigen Kanten (9), die dafür geeignet sind, den Vorsprung (10) des Haltemittels einzugreifen, aufweist.

9. System nach Anspruch 4, worin jedes Röhrchen (6) eine Öffnung aufweist, die mit einer Folie (7) geschlossen ist.

10. Verfahren zum Zusammenlegen einer Vielzahl ausgewählter Aliquots aus chemischen oder biologischen Verbindungen oder Proben, wobei
(a) ein erstes Gestell (1) nach Anspruch 1 zur Aufbewahrung von Probenröhrchen (6), die Aliquots mit einer oder mehreren chemischen oder biologischen Verbindungen oder Proben enthalten, auf den oberen Bereich eines zweiten Gestells (21) nach Anspruch 1 für den Transport dieser Probenröhrchen (6) angeordnet wird, wobei das zweite Gestell zu einer Übertragungsstation (20) gehört und dafür geeignet ist, innerhalb dieser angeordnet zu werden, wobei die Aliquots jeweils in einem Probenröhrchen (6), das in einer der Vertiefungen (5) angeordnet und darin gehalten wird, enthalten sind,
dieses Anordnen vorsieht, dass eine Vertiefung zur Aufbewahrung des ersten Gestells (1), das ein Probenröhrchen (6) enthält, mit einer leeren Vertiefung zur Aufbewahrung des zweiten Gestells übereinstimmt und
(b) Ausstoßen eines Probenröhrchens (6) aus einer Vertiefung des ersten Gestells (1) in die leere Vertiefung des zweiten Gestells (21).

## Revendications

1. Etagère destinée à être utilisée dans un système de manutention de composés permettant de manipuler une multiplicité de tubes (6) contenant des aliquotes de composés ou d'échantillons chimiques ou biologiques, ladite étagère comprenant :
un cadre périphérique (2), ledit cadre présentant un côté supérieur et un côté inférieur ;
des parois de séparation (3) du type grille qui définissent une pluralité de rangées de cavités de stockage (5) à l'intérieur dudit cadre, chacune desdites cavités étant adaptée pour recevoir et retenir un tube (6) contenant un composé ou un échantillon chimique ou biologique sous forme d'aliquote, les cavités de stockage (5) étant définies par lesdites parois de séparation (3), chacune desdites parois de stockage présentant une paroi intérieure et étant ouverte sur le côté supérieur du cadre et ouverte sur le côté inférieur du cadre de telle sorte qu'un tube échantillon (6) peut être inséré à l'intérieur de la cavité de stockage depuis le côté supérieur du cadre ou depuis le côté inférieur du cadre et peut être retiré de la cavité de stockage depuis le côté supérieur du cadre ou depuis le côté inférieur du cadre, et
des moyens (10) permettant de retenir un tube échantillon (6) à l'intérieur de chacune desdites cavités de stockage (5), lesdits moyens de retenue comprenant une projection (10) de la surface intérieure de la paroi de chaque cavité de stockage, ladite projection étant adaptée pour se fixer entre deux bords (9) de la paroi extérieure d'un tube échantillon (6) qui est positionné à l'intérieur de la cavité de stockage.

2. Etagère selon la revendication 1, dans laquelle chacune desdites cavités (5) est adaptée pour recevoir un tube échantillon (6) placé entièrement à l'intérieur de ladite cavité.

3. Etagère selon la revendication 1, dans laquelle chacune desdites cavités de stockage (5) est rectangulaire.

4. Système permettant de former un agencement comprenant une pluralité d'aliquotes sélectionnées d'échantillons chimiques ou biologiques, ledit système étant **caractérisé en ce qu'**il comprend :
(a) une station de transfert (20),
(b) une première étagère (1) selon la revendication 1 permettant le stockage des tubes échantillons (6) contenant des aliquotes d'un ou de plusieurs composés ou échantillons chimiques ou biologiques, lesdites aliquotes étant chacune contenue dans un tube échantillon (6) positionné et retenu dans une desdites cavités (5), ladite première étagère présentant un modèle de cavité,
(c) une seconde étagère (21) selon la revendication 1 permettant le transport desdits tubes échantillons (6), ladite seconde étagère étant adaptée pour être positionnée à l'intérieur de ladite station de transfert (20), ladite seconde étagère (21) présentant le même modèle de cavité que ladite première étagère (1),
(d) des moyens de transport permettant de placer ladite étagère de stockage sur la partie supérieure de ladite étagère de transport (21) à l'intérieur de ladite station de transfert (20), de telle sorte que l'une des cavités de l'étagère de stockage (1) contenant un tube échantillon (6) est dans l'alignement d'une cavité vide de ladite étagère de transport (21), et
(e) des moyens permettant de pousser ledit tube échantillon (6) depuis ladite cavité de l'étagère de stockage (1) à ladite cavité vide de l'étagère de transport (21).

5. Système selon la revendication 4, dans lequel chacune desdites cavités de stockage permet l'insertion et le retrait d'un tube échantillon du côté supérieur ou du côté inférieur de l'étagère et avec la même orientation du tube échantillon (6) par rapport à l'étagère (1).

6. Système selon la revendication 4, dans lequel chacune desdites cavités (5) de ladite étagère de stockage (1) est adaptée pour recevoir un tube échantillon (6) entièrement placé à l'intérieur de ladite cavité.

7. Système selon la revendication 4, dans lequel chacune desdites cavités (5) de ladite étagère de stockage (1) est rectangulaire.

8. Système selon la revendication 4, dans lequel chacun desdits tubes échantillons (6) présente une forme généralement cylindrique et une surface extérieure présentant une paire de bords annulaires parallèles (9) qui sont adaptés pour se mettre en prise avec ladite projection (10) des moyens de retenue.

9. Système selon la revendication 4, dans lequel chaque tube (6) présente une ouverture qui est scellée avec un film (7).

10. Procédé permettant de mettre ensemble une pluralité d'aliquotes sélectionnées de composés ou d'échantillons chimiques ou biologiques comprenant :
(a) le placement d'une première étagère (1) selon la revendication 1 pour le stockage des tubes échantillon (6) contenant les aliquotes d'un ou de plusieurs composés ou échantillons chimiques ou biologiques sur la partie supérieure d'une seconde étagère (21) selon la revendication 1 en vue du transport desdits tubes échantillons (6), ladite seconde étagère faisant partie de et étant adaptée pour être positionnée à l'intérieur de la station de transfert (20), lesdites aliquotes étant chacune contenues dans un tube échantillon (6) positionné et retenu dans une desdites cavités (5),
ledit placement prévoyant qu'une cavité de stockage de la première étagère (1) contenant un tube échantillon (6) soit dans l'alignement d'une cavité de stockage vide de ladite seconde étagère, et
(b) la poussée d'un tube échantillon depuis une cavité de la première étagère (1) à ladite cavité vide de ladite seconde étagère (21).
